# EUROPÄISCHE PATENTANMELDUNG

(11) **EP 1 070 761 A2**
(43) Veröffentlichungstag der Anmeldung: **24.01.2001**
(21) Anmeldenummer: 00113639.9
(22) Anmeldetag: 28.06.2000
(51) Int. Cl.: C22B 7/04

(54) **Verfahren zur Verwertung von kohlenwasserstoff- und zunderhältigen Schlämmen**

(30) Priorität: 21.07.1999 AT 126399
(71) Anmelder: VOEST-ALPINE INDUSTRIEANLAGENBAU GMBH, 4020 Linz (AT)
(72) Erfinder: Zobernig, Andreas, Dipl.-Ing., 4060 Leonding (AT)
(74) Vertreter: Rieberer, Stefan, Dipl.-Ing.

(57) **Zusammenfassung**

Die Erfindung betrifft ein Verfahren zur Verwertung von in Hüttenwerken anfallenden kohlenwasserstoff- und zunderhältigen Schlämmen, wobei kohlenwasserstoff- und zunderhältige Abwässer in einem mehrstufigen Sedimentations- und/oder Filtrationsprozess behandelt werden, wobei kohlenwasserstoffhältiger Zunderschlamm auf einen bestimmten Restfeuchtegehalt entwässert und anschließend in einem kombinierten Trockner/Mischer/Granulator auf einen bestimmten Restfeuchtegehalt getrocknet wird, wobei Kohlenwasserstoffe im getrockneten Zunderschlamm erhalten bleiben.

Das Verfahren gestattet eine Investitions- und Betriebskosten sparende Verwertung von kohlenwasserstoffhältigen Zunderschlämmen.

## Beschreibung

Die Erfindung betrifft ein Verfahren zur Verwertung von in Hüttenwerken anfallenden kohlenwasserstoff- und zunderhältigen Schlämmen, wobei kohlenwasserstoff- und zunderhältige Abwässer in einem mehrstufigen Sedimentations- und/oder Filtrationsprozess behandelt werden.

In der Eisen- und Stahlindustrie fallen zunderhältige Abwässer aus Stranggussanlagen und Walzwerken an, die in der Regel in einer Wasseraufbereitungsanlage für eine Wiederverwertung behandelt werden. Dabei handelt es sich um einen mehrstufigen Sedimentations- und/oder Filtrationsprozess, in der Regel bestehend aus einem oder mehreren Absetzbecken, Bandfiltern, Sandfiltern, etc. Der anfallende Zunder aus den ersten Abscheidestufen kann aufgrund seines geringen Kohlenwasserstoffgehaltes üblicherweise unmittelbar als Wertstoff wiedereingesetzt werden.

Der Zunderschlamm aus der letzten Abscheidestufe - der Filtration - enthält einen relativ hohen Anteil an Ölen und Fetten.

Aufgrund des erwähnten hohen Kohlenwasserstoffgehaltes ist dieser Schlamm weder deponierbar, noch kann der Schlamm in einem Elektroofen eingesetzt oder in einen Hochofen chargiert werden.

Eine Verwertung in einem Hochofen durch Eindüsen in die Blasformen ist zwar möglich, allerdings steht ein Hochofen nur in Ausnahmefällen zur Verfügung und der Schlamm müsste dazu im wesentlichen trocken sein.

Der erwähnte hohe Kohlenwasserstoffgehalt erschwert aber auch eine weitergehende Entwässerung des Schlammes. So ist mit herkömmlichen Entwässerungsmaschinen, etwa Zentrifugen, nur eine Restfeuchte von 30 -40 % Wassergehalt erreichbar.

Um das Problem der (Nicht)Einsetzbarkeit von kohlenwasserstoffhältigen Zunderschlämmen zu lösen, sind aus dem Stand der Technik eine Reihe von Ansätzen bekannt.

Es ist beispielsweise bekannt, dass, um die Trockensubstanz von Zunderschlamm nach einer oben beschriebenen Schlammentwässerung zu erhöhen und um den Schlamm in ein Granulat zu überführen, der entwässerte Schlamm in einem Pflugscharmischer mit Branntkalk vermischt wird. Beim darauffolgenden Einsatz des Granulates im Elektroofen tritt aber das Problem auf, dass die derart hergestellten Agglomerate thermisch zu instabil sind und noch vor dem Erreichen der Badoberfläche zerplatzen, wodurch ein hoher Anteil des Feinzunders ins Abgas übergeht und sich dadurch das Problem des EAF-Staubes vergrößert. Nachteilig ist dieses bekannte Verfahren auch durch den hohen Kalkverbrauch, welcher einerseits einen erheblichen Kostenfaktor darstellt und wodurch andererseits die zu entsorgende Reststoffmenge vergrößert wird.

Aus der US 4,585,475 ist es bekannt, ölhaltigen Walzzunder in zwei Fraktionen, eine grobkörnige und eine feinkörnige Fraktion zu trennen und die feinkörnige Fraktion mit einem Binder, welcher entweder Melasse plus Löschkalk oder Lignosulfonat sein kann, zu vermischen. Die Mischung aus ölhaltigem Walzzunder und Binder wird zu Agglomeraten von solcher Dichte geformt, insbesondere brikettiert, dass die Agglomerate beim Chargieren in ein Stahlbad eine über dem Stahlbad befindliche Schlackeschicht zu durchdringen vermögen. Nachteilig ist bei diesem Verfahren der hohe apparative Aufwand, um Agglomerate mit einer solch hohen Dichte herzustellen, sowie die Verbrauchskosten für den Binder, welcher ebenfalls die insgesamt zu entsorgende Reststoffmenge erhöht.

Die JP-54-4215 schlägt vor, ölhältigen Walzzunderschlamm zu entwässern, in einem Kneter mit Banntkalkpulver, Konverterschlacke und einem zusätzlichen Bindemittel zu vermischen, die Mischung zu brikettieren und die Briketts als Rohmaterial zur Eisenherstellung oder als Schlackebildner einzusetzen.

Während bei diesem Verfahren gleichzeitig auch die Verwertung eines zusätzlichen Reststoffes, nämlich Konverterschlacke, gelingt, ist dazu außer Branntkalk auch noch ein zusätzliches Bindemittel erforderlich. Daher ist das Verfahren vom Gesichtspunkt der Verbrauchskosten her als nachteilig zu beurteilen.

Die JP-54-4216 offenbart, den ölhältigen Walzzunderschlamm zu entwässern und dann zu Pellets zu formen und die Grünpellets unter gleichzeitigem Zusatz eines Bindemittels in einem Trockner zu trocknen.

Es ist fraglich, ob mit diesem Verfahren Pellets mit ausreichender Stabilität, insbesondere thermischer Stabilität, herstellbar sind, da das Bindemittel nicht mit dem Zunderschlamm vermischt wird, sondern allenfalls eine die Pellets umhüllende Schicht bilden kann.

Die Aufgabe der gegenständlichen Erfindung ist es, ein Verfahren nach dem Oberbegriff des Anspruchs 1 zu schaffen, welches es ermöglicht, kohlenwasserstoffhältigen Zunderschlamm auf Investitions- und Betriebskosten sparende Weise zu verwerten.

Diese Aufgabe wird erfindungsgemäß durch die Merkmale des kennzeichnenden Teils des Anspruchs 1 gelöst.

Durch die erfindungsgemäße Merkmalskombination gelangen lediglich zwei Aggregate - Entwässerer und kombinierter Trockner/Mischer/Granulator - zum Einsatz, in denen die Verfahrensschritte Entwässern und Trocknen durchgeführt werden, während gemäß dem Stand der Technik stets zumindest drei Vorrichtungen erforderlich sind, um zu einem Produkt zu gelangen, das wiedereinsetzbar ist. Daraus ergeben sich Einsparungen an Investitions- und Betriebskosten.

Das erfindungsgemäße Verfahren zeichnet sich gegenüber dem Stand der Technik auch dadurch aus, dass durch das erfindungsgemäße Verfahren bereits ein wiedereinsetzbares Produkt erhalten wird, das ohne den Einsatz eines Bindemittels auskommen kann. Das erfindungsgemäß gemäß der einfachsten Ausführungsform erhaltene Produkt wird dabei vorzugsweise in metallurgische Gefäße eingeblasen.

Gemäß einer bevorzugten Ausführungsform wird der der Entwässerung zu unterwerfende kohlenwasserstoffhältige Zunderschlamm der letzten Stufe des mehrstufigen Sedimentations- und/oder Filtrationsprozesses entnommen,

Wie bereits eingangs erwähnt wurde, kann Zunder aus den ersten Abscheidestufen (Grobzunder) in der Regel unmittelbar wiedereingesetzt werden, während Zunder aus der letzten Abscheidestufe (Feinzunder) aufgrund seines hohen Kohlenwasserstoffanteils ein erhebliches Entsorgungsproblem darstellt. Erfindungsgemäß gelingt aber die Wiederverwertung eben dieses Feinzunders.

Das erfindungsgemäße Verfahren zeichnet sich weiters dadurch aus, dass die Entwässerung des kohlenwasserstoffhältigen Zunderschlammes (Verfahrensschritt A) ausschließlich in einem Eindicker oder einer maschinellen Schlammentwässerungsmaschine durchgeführt. Auf den Einsatz weiterer Entwässerungsschritte bzw. -vorrichtungen kann verzichtet werden, da sich gezeigt hat, dass die mit einem Eindicker oder einer maschinellen Schlammentwässerungsmaschine erzielbare Restfeuchte ausreichend ist, um nach einer nachfolgenden Trocknung ein wiedereinsetzbares Produkt zu erhalten.

Der der Entwässerung entnommene Zunderschlamm weist vorteilhafterweise 10 bis 70, vorzugsweise 20 bis 40% Trockensubstanz auf, wobei unter Trockensubstanz der wasserfreie Anteil, also auch Kohlenwasserstoffe verstanden werden.

Zur Durchführung des Trockenschrittes in dem kombinierten Trockner/Mischer/Granulator wird dieser zweckmäßigerweise direkt mit einem Heizmedium, welches von heißen, im Hüttenwerk anfallenden Prozess- bzw. Abgasen gebildet wird, beheizt.

Dadurch wird die in den erwähnten Gasen enthaltene Wärmeenergie vorteilhaft ausgenutzt. Bei Prozess- bzw. Abgasen handelt es sich beispielsweise um Topgas aus einer COREX-Anlage, Elektroofen- oder Konverterabgase. Auch ein Rauchgas aus der Verbrennung eines der vorstehend angeführten Gase oder aus der Verbrennung eines anderen gasförmigen, flüssigen oder festen Kohlenstoffträgers ist als Heizmedium geeignet.

Gemäß einer weiteren, zur obigen alternativen Ausführungsform wird der kombinierte Trockner/Mischer/Granulator indirekt mit einem Heizmedium beheizt. Das Heizmedium, beispielsweise Heißdampf, Sattdampf, Wärmeträgeröl oder technischer Stickstoff, wird dabei zuvor durch Wärmeaustausch mit einem der obenstehend angeführten Prozess- bzw. Abgase auf die erforderliche Temperatur gebracht.

Auch bei dieser Ausführungsform gelingt die weitgehende Nutzung der im Hüttenwerk anfallenden Prozess- bzw. Abgase.

Zweckmäßigerweise wird zur Trocknung des kohlenwasserstoffhältigen Zunderschlammes die Temperatur des Heizmediums über 100°C, aber unter der Siedetemperatur der Kohlenwasserstoffe gehalten.

In diesem Temperaturintervall erfolgt die Trocknung des Zunderschlammes, ohne gleichzeitig Kohlenwasserstoffe zu verdampfen. Diese bleiben im wesentlichen vollständig im Zunderschlamm zurück. Gegenüber anderen Trocknungsverfahren und auch gegenüber aus dem Stand der Technik bekannten Entölungsverfahren hat die erfindungsgemäße Art der Temperatursteuerung den Vorteil, dass einerseits die im Zunderschlamm verbleibenden Kohlenwasserstoffe einen energetischen Beitrag bei der Verwertung des Zunderschlammes zu leisten vermögen, andererseits sind auch die bei der Trocknung entstehenden Brüden deutlich weniger bis gar nicht (abhängig von der Trocknungstemperatur) mit Kohlenwasserstoffen verunreinigt.

Vorzugsweise wird zur Trocknung des kohlenwasserstoffhältigen Zunderschlammes die Temperatur des Heizmediums zwischen 105 und 180°C gehalten. Besonders bevorzugt ist dabei ein Temperaturbereich von 120 bis 150°C.

In dem Temperaturintervall von 105 bis 180°C, bzw. von 120 bis 150°C ist einerseits die Verdampfungsgeschwindigkeit von Wasser ausreichend gross, um den Zunderschlamm innerhalb eines technisch sinnvollen Zeitraumes auf die gewünschte Restfeuchte zu trocknen, andererseits sind diese Temperaturen ausreichend weit unterhalb der Siedetemperaturen der im Zunderschlamm enthaltenen Kohlenwasserstoffe, so dass eine Verunreinigung des Wasserdampfes mit Kohlenwasserstoffen vernachlässigbar ist.

Mit dem erfindungsgemäßen Verfahren wird der kohlenwasserstoffhältige Zunderschlamm im kombinierten Trockner/Mischer/Granulator vorzugsweise auf eine Restfeuchte von im wesentlichen 0 bis 5% Wassergehalt getrocknet, wobei ein Wert von exakt 0% Wassergehalt nicht mitumfasst ist, da dies technisch und wirtschaftlich nicht sinnvoll zu realisieren ist.

In diesem Feuchteintervall liegt der getrocknete Zunderschlamm in pulverförmigem Zustand vor, so dass er unmittelbar in ein metallurgisches Gefäß, beispielsweise einen Hochofen oder einen Elektroofen eingeblasen werden kann. Beim Einblasen in einen Elektroofen ist es empfehlenswert, unter Bad bzw. direkt in das Bad einzublasen, um Probleme mit dem Staubaustrag mit dem EAF-Abgas zu vermeiden.

Um andere Chargierformen außer Einblasen zu ermöglichen, kann es weiters zweckmäßig sein, den getrockneten Zunderschlamm zu granulieren.

Auch das ist mit dem erfindungsgemäßen Verfahren durchführbar und zwar ohne zusätzliche Vorrichtungen vorsehen zu müssen.

Um nun den getrockneten Zunderschlamm zu granulieren, wird dem kombinierten Trockner/Mischer/Granulator ein Bindemittel zugegeben, welches mit dem Zunderschlamm vermischt wird und der Zunderschlamm dadurch granuliert wird. Es kann dabei erforderlich sein, daß zum Granulieren der kombinierte Trockner/Mischer/Granulator in einen eigens dafür vorgesehenen Betriebsmodus geschaltet wird.

Die erfindungsgemäß vorzugsweise verwendeten Bindemittel sind kalkfreie Bindemittel, insbesondere branntkalkfreie Bindemittel, weil aufgrund des geringen

Wassergehalts des Zunderschlammes der Branntkalk nicht bzw. kaum als Bindemittel zu wirken vermag.

Vorzugsweise werden als Bindemittel Öle und/oder Fette verwendet, welche in einer der ersten Stufen des mehrstufigen Sedimentations- und/oder Abscheideprozesses abgeschieden werden. Diese Öle und/oder Fette weisen den Vorteil auf, dass durch ihren Einsatz die insgesamt zu entsorgende Reststoffmenge nicht erhöht wird und dass damit auch der Vorteil einer Entsorgungsmöglichkeit für diese Öle und/oder Fette gegeben ist.

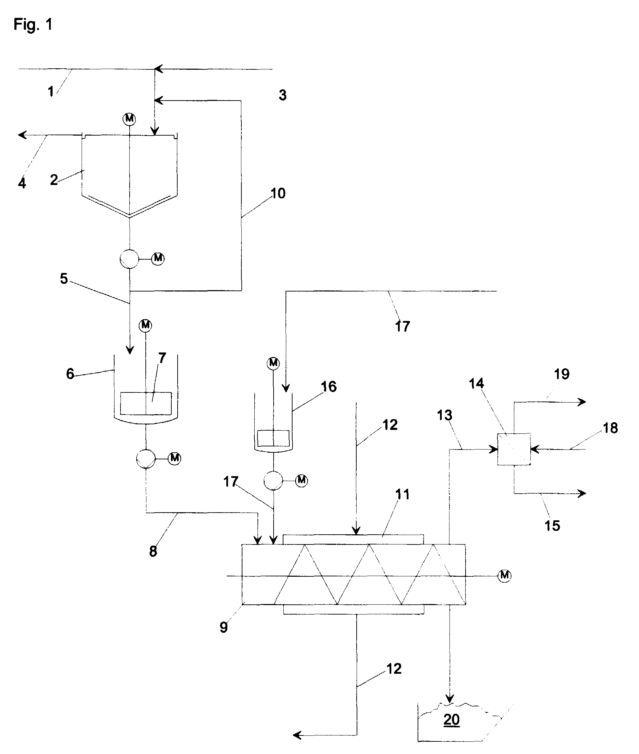

Nachfolgend wird das erfindungsgemäße Verfahren anhand des in der Zeichnung Fig. 1 dargestellten Ausführungsbeispiels näher erläutert.

Fig. 1 zeigt dabei in schematisierter Darstellung sowohl den Verfahrensablauf des erfindungsgemäßen Verfahrens als auch die dabei Verwendung findenden Aggregate.

Rückspülwässer 1 aus einem Sandfilter werden einem Eindicker 2 zugeführt. Den Rückspülwässern 1 wird ein Flockungshilfsmittel 3 zugesetzt, um das Absetzen bzw. Abscheiden von in den Rückspülwässern 1 dispergierten Feststoffen und Kohlenwasserstoffen zu fördern. Der zeichnerisch nicht dargestellte Sandfilter stellt die letzte Stufe des mehrstufigen Abscheide- und/oder Filtrationsprozesses dar.

Im Eindicker 2 setzt sich Zunderschlamm mit einem hohen Kohlenwasserstoffgehalt ab, Überlaufwasser 4 aus dem Eindicker 2 kann im Kreislauf geführt werden und so beispielsweise wieder als Spülmedium für beladene Sandfilter verwendet werden.

Der Eindicker 2 ist über eine Schlammleitung 5 mit einem Schlammzwischenbehälter 6 verbunden, wobei der Schlammzwischenbehälter 6 mit einer Rührvorrichtung 7 versehen ist, um ein weiteres Absetzen des Schlammes zu vermeiden und um den Schlamm pumpbar zu halten.

Der Schlammzwischenbehälter 6 ist über eine weitere Schlammleitung 8 mit einem kombinierten Trockner/Mischer/Granulator 9 verbunden. Der Trockner/Mischer/Granulator 9 ist in einer einfachen Ausführungsform als drehzahlvariabler Pflugschar- oder Paddelmischer ausgeführt und arbeitet bei dem in Fig. 1 dargestellten Ausführungsbeispiel im batch Betrieb.

Da dem Eindicker 2 Zunderschlamm kontinuierlich zugeführt wird, existieren für den Übergang von kontinuierlich betriebenem Eindicker 2 auf chargenweise betriebenen Trockner/Mischer/Granulator 9 mehrere Ausführungsformen. Es kann - wie in Fig. 1 dargestellt - ein Schlammzwischenbehälter 6 vorgesehen sein, es kann weiters - wie in Fig. 1 ebenfalls dargestellt - von der Schlammleitung 5 eine Rückführleitung 10 abzweigen, durch welche Schlamm über den Eindicker 2 im Kreislauf geführt wird. Schließlich ist es auch möglich, den Eindicker 2 derart zu dimensionieren, dass dieser unter den gegebenen Betriebsbedingungen jederzeit imstande ist, den Trockner/Mischer/Granulator 9 mit einer Charge Zunderschlamm zu versorgen. Jede dieser drei Ausführungsformen kann für sich alleine oder in Kombination mit einer oder beiden anderen angewendet werden.

Der Trockner/Mischer/Granulator 9 ist mit einem Heizmantel 11 versehen, welcher von einem Heizmedium 12 durchströmt wird. Das Heizmedium 12 kann dabei flüssig oder gasförmig sein, wobei als flüssiges Heizmedium vorzugsweise Wärmeträgeröl zum Einsatz gelangt, aber auch überhitztes, unter Druck stehendes Wasser kann verwendet werden. Als gasförmiges Heizmedium kann beispielsweise eines der in einem Hüttenwerk anfallenden Prozess- bzw. Abgase verwendet werden, also z.B. Abgas aus einem Elektroofen, einem Konverter oder einem Hubbalkenofen oder Topgas aus dem Reduktionsschacht einer COREX-Anlage. Als gasförmiges Heizmedium ist auch Sattdampf, Heißdampf oder technischer Stickstoff verwendbar.

Der Trockner/Mischer/Granulator 9 kann direkt oder indirekt beheizt werden, wobei bei indirekter Beheizung ein Wärmeübertragungssystem vorgesehen ist, mittels welchem Wärme von einem der Prozess- bzw. Abgase auf das Heizmedium 12, welches bei indirekter Beheizung vorzugsweise Wärmeträgeröl, Heißdampf, Sattdampf oder Stickstoff ist, übertragen wird.

Der aus dem Trockner/Mischer/Granulator 9 austretende Wasserdampf 13 wird in einem Kondensator 14 (mit Kühlwasserleitungen 18 und 19) kondensiert und kann als Zusatzwasser 15 für die geschlossenen Kreisläufe einer Wasseraufbereitungsanlage verwendet werden.

Der Trockner/Mischer/Granulator 9 ist mit einem Behälter 16 für Bindemittel 17 verbunden, wobei Bindemittel 17 dem Trockner/Mischer/Granulator 9 nach oder gegen Ende der erfolgten Trocknung einer Charge Zunderschlamm zugegeben wird. In letzterem Fall kann auch ein geringer Feuchtegehalt des Bindemittels toleriert werden, da diese Feuchte ebenfalls noch entfernt wird. Der Trockner/Mischer/Granulator 9 wird dann durch Erhöhen der Drehzahl in den Betriebsmodus 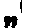 Granulieren" geschaltet und die Beheizung abgestellt oder reduziert, da die Granulation vorzugsweise bei niedrigeren Temperaturen als die Trocknung erfolgt.

Wenn keine Bindemittelzugabe erfolgt, liegt das trockene Produkt 20 schließlich in Pulverform vor, mit Bindemittelzugabe und anschließender Granulierung als Granulat und zwar mit einer Korngröße von 1 bis 150 µm (Pulver) bzw. etwa 1 bis 3 cm (Granulat).

Die Anlage gemäß dem Ausführungsbeispiel aus Fig. 1 ist imstande, Zunderschlamm aus einem Warmwalzwerk - mit einer Kapazität von etwa 3 Mill. jato Breitband - zu verarbeiten.

In einem solchen Warmwalzwerk fallen beispielsweise etwa 420 kg/h Zunder und etwa 12 kg/h Kohlenwasserstoffe in den Sandfiltern - der letzten Stufe des mehrstufigen Sedimentations- und/oder Filtrationsprozesses - an. Die Sandfilter werden mit Wasser regeneriert und dieses mit Zunder und Kohlenwasserstoffen beladene Rückspülwasser einem Eindicker 2 zugeführt. In dem Eindicker 2 wird der kohlenwasserstoffhältige Zunderschlamm soweit entwässert, dass er eine Trockensubstanz von etwa 35% aufweist. Dieser entwässerte Zunderschlamm wird chargenweise in den kombinierten Trockner/Mischer/Granulator 9 überführt, wo er bei etwa 110°C auf eine Restfeuchte <3% getrocknet wird. Der Trockner/Mischer/Granulator 9 wird dabei mit Sattdampf (5 bar, 1000 kg/h) beheizt. Der aus dem Zunderschlamm abgedampfte Wasserdampf 13 wird in einem Kondensator 14 (Kühlwasserbedarf etwa 16 m³/h, 25°C) auskondensiert und das Kondensat (etwa 800 kg/h, 40°C) als Zusatzwasser 15 in einer Wasseraufbereitungsanlage verwendet.

Nachdem der Zunderschlamm getrocknet wurde (Trocknungsdauer etwa ½ bis 1 Stunde), wird das Pulver 20 unmittelbar, d.h. ohne weiteren Behandlungsschritt, in einen Hochofen eingeblasen.

Alternativ dazu wird dem Trockner/Mischer/Granulator 9 Bindemittel 17, und zwar Öle und Fette, die in einem Zunderbecken - der ersten Stufe des mehrstufigen Sedimentations- und/oder Filtrationsprozesses - abgeschieden wurden, zugesetzt. Der Trockner/Mischer/Granulator 9, der beim Trocknen mit geringer Geschwindigkeit betrieben wurde, wird zum Mischen und Granulieren mit hoher Geschwindigkeit betrieben. Im Gegensatz zum Trocknen, dauern Mischen und Granulieren zusammen nur wenige Sekunden bis etwa 5 Minuten.

Das fertige Granulat 20 wird danach ohne weiteren Behandlungsschritt beispielsweise in einen EAF chargiert.

## Patentansprüche

1. Verfahren zur Verwertung von in Hüttenwerken anfallenden kohlenwasserstoff -und zunderhältigen Schlämmen, wobei kohlenwasserstoff- und zunderhältige Abwässer in einem mehrstufigen Sedimentations- und/oder Filtrationsprozess behandelt werden, **gekennzeichnet durch die Kombination der folgenden Merkmale**:
A) Entwässern kohlenwasserstoffhältigen Zunderschlammes auf einen bestimmten Restfeuchtegehalt,
B) Einbringen des entwässerten kohlenwasserstoffhältigen Zunderschlammes in einen kombinierten Trockner/Mischer/Granulator und
C) Trocknen des entwässerten kohlenwasserstoffhältigen Zunderschlammes in dem kombinierten Trockner/Mischer/Granulator auf einen bestimmten Restfeuchtegehalt, wobei ein trockenes, rieselfähiges Produkt erhalten wird und wobei die Kohlenwasserstoffe in dem Produkt erhalten bleiben.

2. Verfahren nach Anspruch 1, **dadurch gekennzeichnet**, dass der der Entwässerung zu unterwerfende kohlenwasserstoffhältige Zunderschlamm der letzten Stufe des mehrstufigen Sedimentations- und/oder Filtrationsprozesses entnommen wird.

3. Verfahren nach einem der Ansprüche 1 oder 2, **dadurch gekennzeichnet**, **dass** die Entwässerung ausschließlich in einem Eindicker oder einer maschinellen Schlammentwässerungsmaschine durchgeführt wird.

4. Verfahren nach einem der Ansprüche 1 bis 3, **dadurch gekennzeichnet, dass** der kohlenwasserstoffhältige Zunderschlamm auf 10 bis 70, vorzugsweise auf 20 bis 40 % Trockensubstanz entwässert wird.

5. Verfahren nach einem der Ansprüche 1 bis 4, **dadurch gekennzeichnet, dass** der kombinierte Trockner/Mischer/Granulator direkt mit einem von heißen, im Hüttenwerk anfallenden Prozess- bzw. Abgasen gebildeten Heizmedium beheizt wird.

6. Verfahren nach einem der Ansprüche 1 bis 5, **dadurch gekennzeichnet, dass** der kombinierte Trockner/Mischer/Granulator indirekt mit einem Heizmedium, vorzugsweise mit Heißdampf, Sattdampf oder Wärmeträgeröl, beheizt wird.

7. Verfahren nach einem der Ansprüche 5 oder 6, **dadurch gekennzeichnet, dass** zur Trocknung des kohlenwasserstoffhältigen Zunderschlammes die Temperatur des Heizmediums über 100°C, aber unter der Siedetemperatur der Kohlenwasserstoffe gehalten wird.

8. Verfahren nach einem der Ansprüche 5 bis 7, **dadurch gekennzeichnet, dass** zur Trocknung des kohlenwasserstoffhältigen Zunderschlammes die Temperatur des Heizmediums zwischen 105 und 180°C, vorzugsweise zwischen 120 und 150°C, gehalten wird.

9. Verfahren nach einem der Ansprüche 1 bis 8, **dadurch gekennzeichnet, dass** der kohlenwasserstoffhältige Zunderschlamm im kombinierten Trockner/Mischer/Granulator auf eine Restfeuchte von im wesentlichen 0% bis 5% Wassergehalt getrocknet wird.

10. Verfahren nach einem der Ansprüche 1 bis 9, **dadurch gekennzeichnet, dass**, um den getrockneten Zunderschlamm zu granuileren, dem kombinierten Trockner/Mischer/Granulator ein Bindemittel zugegeben wird, welches mit dem Zunderschlamm vermischt und der Zunderschlamm dadurch granuliert wird.

11. Verfahren nach Anspruch 10, **dadurch gekennzeichnet, dass** das Bindemittel aus der Gruppe der kalkfreien Bindemittel ausgewählt wird, wobei Öle und/oder Fette, die in einer der ersten Stufen des mehrstufigen Sedimentations und/oder Filtrationsprozesses abgeschieden werden, bevorzugt verwendet werden.
